# EUROPÄISCHE PATENTSCHRIFT

(11) **EP 1 110 434 B1**
(45) Veröffentlichungstag und Bekanntmachung des Hinweises auf die Patenterteilung: **23.10.2002**
(21) Anmeldenummer: 99953611.3
(22) Anmeldetag: 26.08.1999
(51) Int. Cl.: H05B 41/26

(54) **ELEKTRONISCHES VORSCHALTGERÄT FÜR ENTLADUNGSLAMPE MIT DIELEKTRISCH BEHINDERTEN ENTLADUNGEN**
ELECTRONIC BALLAST FOR A DISCHARGE LAMP COMPRISING DIELECTRICALLY IMPEDED DISCHARGES
BALLAST ELECTRONIQUE POUR LAMPE A DECHARGES DIELECTRIQUEMENT EMPECHEES

(30) Priorität: 28.08.1998 DE 19839329
(43) Veröffentlichungstag der Anmeldung: 27.06.2001
(73) Patentinhaber: Patent-Treuhand-Gesellschaft für elektrische Glühlampen mbH, 81543 München (DE); Vollkommer, Frank, Dr., 82131 Buchendorf (DE); Hitzschke, Lothar, Dr., 81737 München (DE)
(72) Erfinder: WAMMES, Klaus, D-67577 Alsheim (DE); HITZSCHKE, Lothar, D-81737 München (DE); VOLLKOMMER, Frank, D-82131 Buchendorf (DE)
(86) Internationale Anmeldenummer: DE9902680
(87) Internationale Veröffentlichungsnummer: WO00013472

(56) Entgegenhaltungen:
- EP-A- 0 781 078
- WO-A-97/26779
- WO-A-98/35536
- WO-A-99/35891
- WO-A-99/46963

## Beschreibung

### Technisches Gebiet

Die vorliegende Erfindung bezieht sich auf ein Betriebsverfahren und ein entsprechendes elektronisches Vorschaltgerät für eine Entladungslampe. Dabei beziehen sich das Betriebsverfahren und das Vorschaltgerät auf einen bestimmten Entladungslampentypus, bei dem sogenannte dielektrisch behinderte Entladungen zur Lichterzeugung ausgenutzt werden. Zur Erzeugung solcher Entladungen befindet sich zwischen zumindest einer der Entladungselektroden und dem Entladungsmedium der Entladungslampe eine dielektrische Schicht. Auf die Technologie der Entladungslampen mit dielektrisch behinderten Entladungen wird hier nicht im einzelnen eingegangen und diesbezüglich verwiesen auf den Stand der Technik.

### Stand der Technik

Die technische Entwicklung hat sich in diesem Gebiet bislang hauptsächlich mit der Entladungslampe als solcher beschäftigt. Eine Ausnahme hierzu ist eine frühere Patentanmeldung zu einem einschlägigen Betriebsverfahren mit einer gepulsten Wirkleistungseinkopplung in die Entladungslampe. Hierzu wird verwiesen auf die WO 94/23442, deren Offenbarungsgehalt hier durch Inbezugnahme mit inbegriffen ist. Das dort dargestellte Betriebsverfahren bildet die Grundlage für die im Folgenden beschriebene Erfindung.

Die vorliegende Erfindung beschäftigt sich dabei mit der Umsetzung der in dem zitierten Stand der Technik grundsätzlich beschriebenen Betriebsweise in ein elektrotechnisch besonders vorteilhaftes Betriebsverfahren und ein zugehöriges elektronisches Vorschaltgerät. Bei der Entwicklung eines solchen Betriebsverfahrens und Vorschaltgeräts wird allgemein angestrebt, verschiedene Qualitätskriterien in einem möglichst günstigen Gesamtkompromiß zu erfüllen. Zunächst soll ein elektronisches Vorschaltgerät möglichst leistungseffizient arbeiten, um zusammen mit dem Wirkungsgrad der Lampe einen guten Gesamtwirkungsgrad eines Beleuchtungssystems aus Entladungslampe und Vorschaltgerät zu erzielen.

Ein zweiter Gesichtspunkt betrifft die durch ein entsprechendes Betriebsverfahren ermöglichte kompakte und leichte Bauweise eines elektronischen Vorschaltgeräts, das in soweit auch für den Einbau bei beengten Platzverhältnissen oder Gewichtsbeschränkungen geeignet ist. Dies spielt gerade bei den hinsichtlich der Entladungslampen mit dielektrisch behinderter Entladung besonders interessanten Anwendungsgebieten eine wesentliche Rolle. Beispiele sind Hinterleuchtungssysteme für Flachbildschirme oder Kopierlampen, auf die im weiteren Verlauf der Beschreibung noch eingegangen wird.

Schließlich sollen wirtschaftliche Vorteile im Hinblick auf die Massenherstellungskosten und die Lebensdauer und Ausfallhäufigkeit erzielt werden.

Zum Stand der Technik wird verwiesen auf die WO-A-98/35536, die ein Betriebsverfahren nach dem Oberbegriff des Anspruchs 1 und ein Vorschaltgerät nach dem Oberbegriff des Anspruchs 15 offenbart. Dieses Dokument zeigt bei steigenden wie auch bei fallenden Flanken der Lampenspannung an Entladungslampen Ausschläge im Lampenstrom, denen jeweils Zündungen zugeschrieben werden. Im Beschreibungstext ist von einem Sperrwandlerprinzip die Rede.

### Darstellung der Erfindung

Der Erfindung liegt das technische Problem zugrunde, ausgehend von der technischen Lehre der WO 94/23442 ein besonders günstiges Betriebsverfahren unter Verwendung eines Vorschaltgeräts und ein hierzu ausgelegtes Beleuchtungssystem und Vorschaltgerät anzugeben.

Hierzu ist erfindungsgemäß vorgesehen ein Betriebsverfahren für eine Entladungslampe mit einer dielektrischen Schicht zwischen zumindest einer Elektrode und einem Entladungsmedium unter Verwendung eines Vorschaltgeräts mit einem leistungsversorgten Primärkreis, einem die Entladungslampe enthaltenden Sekundärkreis sowie einem den Primärkreis mit dem Sekundärkreis verbindenden Transformator, bei welchem Verfahren dem Sekundärkreis aus dem Primärkreis über den Transformator ein Spannungspuls eingeprägt wird, der zu einer eine Zündung bewirkenden äußeren Spannung an der Entladungslampe und zu einer inneren Gegenpolarisation in der Entladungslampe führt, dadurch gekennzeichnet, daß der Sekundärkreis nach dem Einprägen des Spannungspulses eine Schwingung ausführt, durch die die Ladung von der Entladungslampe wieder abgezogen wird, bis die Gegenpolarisation zu der Rückzündung führt, und der Spannungspuls nach dem Flußwandlerprinzip aus dem Primärkreis in den Sekundärkreis eingeprägt wird.

Ferner betrifft die Erfindung ein Beleuchtungssystem mit einer Entladungslampe und einem Vorschaltgerät, das für das erfindungsgemäße Betriebsverfahren ausgelegt ist.

Schließlich bezieht sich die Erfindung auch auf ein für das Betriebsverfahren geeignetes Vorschaltgerät in Form eines Flußwandlers.

Die verschiedenen abhängigen Ansprüche betreffen dabei bevorzugte Ausgestaltungen der Erfindung.

Erfindungsgemäß ist also ein Betriebsverfahren für eine Entladungslampe der bereits beschriebenen Art vorgesehen, bei dem ein Vorschaltgerät Verwendung findet. Für die Zwecke dieser Erfindung besteht dieses Vorschaltgerät, bei dem es sich vorzugsweise um ein elektronisches Vorschaltgerät handelt, aus einem Primärkreis, der in einer hier nicht weiter interessierenden Weise mit Leistung versorgt ist, und einem Sekundärkreis, in den die Lampe geschaltet werden soll bzw. geschaltet ist. Der Primärkreis und der Sekundärkreis sind gekoppelt über einen Transformator, über den aus dem Primärkreis in den Sekundärkreis Leistung eingekoppelt werden kann.

Es ist nun vorgesehen, über den Transformator einen Spannungspuls in den Sekundärkreis einzukoppeln, der zu einer äußeren Spannung an der Entladungslampe führt. Für den der Erfindung zugrunde liegenden Gedanken ist das darauffolgende Verhalten der Entladungslampe selbst von Bedeutung. Es hat sich nämlich herausgestellt, daß es in den hier betrachteten Entladungslampen mit dielektrisch behinderten Entladungen zu einer Gegenpolarisation in der Entladungslampe als dielektrische Reaktion auf die äußere Spannung und als Resultat einer durch eine äußere Spannung gezündeten Entladung kommt.

Und zwar kommt es nach Erreichen der Zündspannung zur Ausbildung von Entladungen in dem Entladungsmedium, wie dies in der bereits in Bezug genommenen Grundlagenanmeldung zu dem Betriebsverfahren näher beschrieben ist. Infolgedessen bewegen sich Ladungsträger zu der dielektrischen Schicht auf einer der Elektroden und stauen sich zunehmend auf der dielektrischen Schicht auf. Hierdurch wird eine innere Gegenpolarisation gegen das äußere Feld geschaffen, die solange ansteigt, bis in dem Entladungsmedium kein Gesamtfeld mehr vorliegt, so daß auch kein Strom mehr durch die Lampe fließen kann. Damit hat sich das Entladungsmedium von einem als Ohmscher Verbraucher wirkenden Verhalten - wenngleich mit zeitveränderlichem Widerstand - zu einem sich als Kapazität darstellenden elektrischen Verhalten verändert.

Hinzu kommt, daß mit dem Entladungsmedium weitere Kapazitäten in Reihe geschaltet sind, und zwar insbesondere durch die eine oder mehrere dielektrische Schichten auf den Elektroden.

Ausgehend von diesem physikalischen Verhalten der Entladungslampe besteht der Grundgedanke der Erfindung nun darin, diese innere Gegenpolarisation nicht als störenden Effekt aufzufassen, sondern funktional in das Betriebsverfahren und auch in das Funktionsprinzip des zugehörigen Vorschaltgeräts zu integrieren. In diesem Sinn sieht das erfindungsgemäße Betriebsverfahren vor, die äußere Spannung an der Entladungslampe, die ursprünglich die eben beschriebene Gegenpolarisation verursacht hat, ausreichend schnell von der Entladungslampe wieder abzuziehen, um die innere Gegenpolarisation zu einer weiteren Zündung in umgekehrter Richtung nach der durch die äußere Spannung bewirkten ersten Zündung führen zu lassen. Diese zweite Zündung wird hier als Rückzündung bezeichnet und geht nicht, jedenfalls nicht vollständig, auf eine äußere Spannung, sondern vielmehr, jedenfalls zumindest zum Teil, auf die innere Gegenpolarisation zurück.

In dieser Anmeldung wird der Übersichtlichkeit der Darstellung halber so argumentiert, daß die äußere Spannung an der Entladungslampe oder die innere Gegenpolarisation eine Zündung bewirken. Der Vollständigkeit halber muß hierzu jedoch noch ergänzt werden, daß das Zündverhalten der Lampe von einer Zahl weiterer Parameter abhängt. Insbesondere spielt die Flankensteilheit bzw. die Ableitung beim Aufbau einer Spannung an der Lampe bzw. eines Feldes in der Lampe eine wesentliche Rolle. Dies bedeutet daß beispielsweise eine Zündung infolge einer äußeren Spannung an der Entladungslampe bei kleineren Spannungswerten erfolgt, wenn diese äußere Spannung sehr schnell aufgebaut wird. Dieses im Grunde empirische Resultat läßt sich wohl dadurch erklären, daß die Elektroden dem Feldanstieg schlechter folgen können, eventuell zusätzlich dadurch, daß mit steilerem Spannungsanstieg und damit größerem Anteil hochfrequenter Fourierkomponenten an dem Spannungsverlauf die Hochfrequenzleitfähigkeit insbesondere des Dielektrikums verbessert und damit das tatsächlich in dem Entladungsmedium herrschende Feld vergrößert wird.

Auch andere Zeitparameter spielen eine Rolle, etwa die sogenannte Totzeit zwischen den einzelnen Wirkleistungspulsen. Je länger diese Totzeit gewählt ist, um so geringer ist die am Ende der Totzeit verbliebene Restionisation und um so höher ist damit die für eine erneute Zündung erforderliche Spannung.

Im weiteren Verlauf dieser Anmeldung werden diese Zusammenhänge nicht weiter problematisiert, weil sie mit dem Prinzip dieser Erfindung nicht direkt verbunden sind. Man muß sich jedoch im Bewußtsein halten, daß neben den reinen Spannungswerten und den Lampenparametern für das Zünd- und das Rückzündverhalten auch die zeitlichen Parameter des Betriebsverfahrens eine wesentliche Rolle spielen.

Hinsichtlich der zeitlichen Reihenfolge und den im Folgenden verwendeten Bezeichnungen erste Zündung und Rückzündung ist anzumerken, daß sich dieses Betriebsverfahren von dem Entladungslampenstart abgesehen natürlich auf einen kontinuierlichen Entladungsbetrieb richtet, so daß auf die Rückzündung wiederum eine "Hinzundung", also erste Zündung, folgt. Bei der Beschreibung der Erfindung wird jedoch nur eine Grundeinheit dieses wiederholten Ablaufs betrachtet, wobei der Einfachheit halber die "erste" Zündung auf die äußere Spannung bezogen wird. Dabei ist es übrigens nicht unbedingt notwendig, daß das Betriebsverfahren insgesamt im strengen Sinne periodisch ist.

Dementsprechend betrifft die Erfindung auch ein Beleuchtungssystem, womit hier ein System aus einer Entladungslampe und einem Vorschaltgerät gemeint ist, die zu einem Betrieb nach dem erfindungsgemäßen Betriebsverfahren ausgelegt sind. Dazu muß das Vorschaltgerät in geeigneter Weise auf die jeweilige Entladungslampe abgestimmt sein, hinsichtlich der von der Erfindung beabsichtigten Funktionsweise vor allem hinsichtlich der Kapazität.

Wesentliche Vorteile der erfindungsgemäßen Rückzündung sind die folgenden: Zunächst wird die gewissermaßen unvermeidlicherweise in die Gegenpolarisation gelangte Energie zumindest zu einem erheblichen Teil durch die Rückzündung in die Lichterzeugung umgesetzt und damit die Gesamtenergieausnutzung verbessert. Zwar könnte die Gegenpolarisation auch in geeigneter Weise so abgebaut werden, daß die darin gespeicherte Energie über den Transformator in den Primärkreis zurückfließen kann, jedoch ist dies natürlich mit insgesamt gesteigerten Verlusten verbunden, weil der in den Primärkreis zurückgelangte Anteil wiederum über den Transformator und den Sekundärkreis in die Entladungslampe gelangen muß, um nutzbar gemacht zu werden.

Des weiteren ergibt sich aus der verbesserten Energieausnutzung und insbesondere auch im Vergleich zu einem Abbau der Gegenpolarisation in Form einer Rückführung in den Primärkreis, daß die Schaltung des Vorschaltgeräts bei einer gegebenen Entladungslampenleistung kleiner ausgelegt sein kann. Dies folgt einfach daraus, daß mit Hilfe der Erfindung mit einer auf geringere Leistungen hin ausgelegten Primärkreisschaltung die gleiche Entladungslampenleistung versorgt werden kann, und zwar durch die bessere Energieausnutzung auf der Sekundärkreisseite und durch das Entfallen oder die Verringerung der Notwendigkeit, auf der Sekundärkreisseite nicht "verbrauchte" Energiebeträge wieder auf die Primärkreisseite zurückzuführen. In dem Umfang einer Verbesserung der Energieausnutzung als solche, kann auch die Sekundärkreisseite auf geringere Leistungen hin ausgelegt sein.

Schließlich hat sich auch herausgestellt, daß die Rückzündung für die Entladungsphysik in der Entladungslampe selbst von Vorteil ist, indem sie die örtlichen Verteilungen von verschiedenen chemischen Spezies und Ladungsträgern homogenisiert. Damit ist die erfindungsgemäße Betriebsweise mit ersten Zündungen folgenden Rückzündungen nicht in dem Sinn zu verstehen, daß aus elektrotechnischen Gründen Rückzündungen gewissermaßen in Kauf genommen werden, sondern daß sie sowohl aus der Perspektive der Physik des Entladungsmediums als auch aus elektrotechnischer Sicht eine besonders günstige Verwirklichung der hier zugrundeliegenden gepulsten Betriebsweise gemäß der in Bezug genommenen Anmeldung darstellt

Aus der Sicht der Erfinder ist es zum Verständnis der der Erfindung zugrunde liegenden Effekte hilfreich, sich klar zu machen, daß in den von der Erfindung in Betracht gezogenen Entladungslampen im Vergleich zu Metallen typischerweise um viele Größenordnungen geringere Ladungsträgerkonzentrationen auftreten, so daß äußere Felder nur unter Zurücklegung vergleichsweise größerer Strecken durch die jeweils beweglichen Ladungsträger durch ein Gegenfeld kompensiert werden können. Aus diesen im Vergleich zu quasi instantan abschirmenden Metallen sehr viel größeren Strecken ergeben sich Zeitverzögerungen, von denen sich herausgestellt hat, daß sie im Bereich der typischen Pulsfrequenzen der hier in Betracht gezogenen gepulsten Betriebsweise bereits einen wesentlichen Effekt darstellen können.

Bei der Erfindung geht es also darum, in der Zeitspanne zwischen der ersten Zündung und der Rückzündung den Sekundärkreis zu einem Abziehen der äußeren Spannung von der Entladungslampe zu führen. Dies erfolgt durch ein möglichst ungebremstes Durchschwingenlassen des Sekundärkreises. Es wird Bezug genommen auf den Offenbarungsgehalt der Parallelanmeldung "Elektronisches Vorschaltgerät für Entladungslampe mit elektrisch behinderten Entladungen" derselben Anmelderin vom selben Anmeldetag und dem Aktenzeichen 198 39 336.9, die eine Alternative zeigt.

Nach einem spezielleren Gesichtspunkt der Erfindung wird die Rückzündung in der Entladungslampe über den Aspekt der verbesserten Energieausnutzung hinaus noch zu einer weiteren Funktion eingesetzt Diese weitere Funktion betrifft die Entmagnetisierung des Transformators in dem Vorschaltgerät.

Hierzu muß zunächst erklärt werden, daß bei einem Vorschaltgerät mit dem beschriebenen Aufbau aus einem Primärkreis und einem über einen Transformator an den Primärkreis angeschlossenen Sekundärkreis bei einer Wirkleistungseinkopplung in den Sekundärkreis in gepulster Weise generell eine gewisse Restmagnetisierung in dem Transformator nach der in der Sprache dieser Anmeldung ersten Zündung verbleibt Im Stand der Technik sind sehr zahlreiche verschiedene Möglichkeiten vorgeschlagen worden, diese Restmagnetisierung abzubauen, um nicht bei Dauerbetrieb durch immer wieder aufeinander aufbauende Restmagnetisierungsbeträge den Transformator direkt in eine magnetische Sättigung zu treiben. Z. B. können der Primärseite des Transformators parallel geschaltete Schaltungen aus Entmagnetisierungsspulen und Dioden verwendet werden. Ein Beispiel für eine relativ aufwendige Lösung zeigt die US 4 739 285. Jedenfalls weisen konventionelle Vorschaltgeräte aus dem Stand der Technik grundsätzlich in irgendeiner Weise gestaltete Entmagnetisierungsschaltungen auf.

Erfindungsgemäß wird nun im Zusammenhang mit dem Abziehen der äußeren Spannung bzw. der diese bewirkenden Ladung von der Entladungslampe in Vorbereitung der Rückzündung gleichzeitig die Restmagnetisierung in dem Transformator zumindest zu einem erheblichen Teil abgebaut. Damit können, je nach genauer Ausführung der Schaltung, Entmagnetisierungsschaltungen nach dem Stand der Technik entweder ganz entfallen oder doch im Hinblick auf deutlich kleinere Restmagnetisierungsbeträge ausgelegt werden. Insbesondere ist es aber auch möglich, ohne jede Entmagnetisierungsschaltung zu arbeiten, indem die Sekundärkreisseite durch die Rückzündung den der Restmagnetisierung entsprechenden Energiebetrag aus dem Transformator weitgehend verbraucht und ein eventuell verbleibender kleiner Energiebetrag gegebenenfalls in geeigneter Weise durch den Transformator selbst in den Primärkreis zurückgeführt werden kann, jedoch nicht muß. Dies wird im Folgenden noch weiter erläutert.

Festzustellen ist dabei schließlich, daß die Restmagnetisierung nach der Rückzündung bei dieser Erfindung keineswegs auf Null zurückgeführt sein muß. Es ist, allgemeiner gesprochen, nicht erforderlich, daß der Sekundärkreis nach der Rückzündung völlig energiefrei wird. Entscheidend ist nur, daß ein Sättigungszustand des Transformators vermieden wird. Weiterhin darf eine eventuell an der Entladungslampe verbleibende Spannung - unter Berücksichtigung der Steilheit der auftretenden Flanken - natürlich nicht die Zündspannung erreichen. In diesem Sinn sind die zugehörigen Ansprüche so zu verstehen, daß zumindest ein Beitrag zu der Entmagnetisierung des Transformators geleistet werden soll.

Ein Vorteil der erfindungsgemäßen Entmagnetisierung des Transformators durch den Abbau der äußeren Spannung an der Entladungslampe und die Rückzündung ist zunächst die Möglichkeit, Entmagnetisierungsschaltungen entweder ganz zu vermeiden oder kleiner auszulegen. Bevorzugt ist der Fall, daß das erfindungsgemäße Vorschaltgerät keine gesonderte Entmagnetisierungsschaltung aufweist. Dadurch wird die Schaltung nicht nur effizienter, sondern auch einfacher und preiswerter. Durch den Wegfall der mit einer konventionellen Entmagnetisierungsschaltung verbundenen Bauteile kann auch ein Gewinn an Zuverlässigkeit erreicht werden. Insbesondere hat es sich jedoch als wesentlicher Vorteil der Erfindung herausgestellt, daß entsprechende Vorschaltgeräte ganz erheblich viel kleiner und leichter als konventionelle Vergleichsschaltungen gestaltet werden können. Dies ist für manche Anwendungsfälle, beispielsweise in den bereits erwähnten Bereichen von Kopierlampen oder von Flachbildschirmhinterleuchtungen, von ganz erheblichem Vorteil.

Schließlich kann durch den Transformator auch eine vollständige galvanische Trennung zwischen der Primärkreisseite und der Sekundärkreisseite erreicht werden, wenn keine solchen Entmagnetisierungsschaltungen vorliegen, die diese beiden Kreise verbinden. Dies ist aus Sicherheitsgründen sehr erwünscht.

Die Erfindung bezieht sich auf eine konkrete Schaltungsform bzw. Schaltungsbetriebsweise für das bereits allgemein beschriebene Betriebsverfahren. Bei dieser Schaltungsform wird der Sekundärkreis nach dem Einprägen des Spannungspulses - spätestens nach dem Aufbau der äußeren Spannung an der Entladungslampe - als Schwingkreis betrachtet. Hierbei läßt man die mit der äußeren Spannung an der Entladungslampe verbundene Ladung in einer elektromagnetischen Schwingung von der Entladungslampe ablaufen und damit der Gegenpolarisation bis zur Rückzündung gewissermaßen so lange Zeit, bis die äußere Spannung in ausreichendem Umfang abgefallen ist. Dabei muß die Schwingung nicht unbedingt eine völlig freie Schwingung sein, wesentlich ist jedoch, daß auf eine "Triggerung" der Rückzündung von außen verzichtet werden kann.

Dazu ist ein Flußwandler als Vorschaltgerät vorgesehen, bei dem der Primärkreis den Spannungspuls in direkter zeitlicher Kopplung zwischen einem Primärkreisstrom durch den Transformator und dem entsprechenden Sekundärkreisinduktionsstrom in den Sekundärkreis einprägt. Bei dem Flußwandler fließt also zum Zeitpunkt der Spannungserzeugung auf der Sekundärkreisseite auch ein entsprechender primärseitiger Transformatorstrom. Der Aufbau der äußeren Spannung an der Entladungslampe erfolgt mit einer entsprechenden Umladezeitverzögerung.

Dabei ist es bevorzugt, daß der Sekundärkreis nach der Erzeugung des Spannungspulses und nach der Zündung in der Entladungslampe als Schwingkreis isoliert ist, also insbesondere nicht durch einen weiteren Induktionsstromfluß auf der Primärkreisseite des Transformators stark gedämpft wird. Hierzu kann auf der Primärkreisseite ein Schalter vorgesehen sein, der den Transformatorstrom zu einem geeigneten Zeitpunkt unterbricht und damit den Sekundärkreis als Schwingkreis isoliert.

Faßt man einen solchen Schalter im Primärkreis zur Steuerung des primärseitigen Stromflusses durch den Transformator mit seiner an das erfindungsgemäße Verfahren angepaßten Steuerung begrifflich zu einer Schalteinrichtung zusammen, so ist bereits ein Vorschaltgerät ohne daran angeschlossene Entladungslampe durch diese erfindungsgemäße Schalteinrichtung in dem Primärkreis des Flußwandlers charakterisiert. Die Erfindung ergibt sich also nicht durch ein Zusammenfügen eines an sich konventionellen Vorschaltgerätes mit einer entsprechenden Entladungslampe allein durch geeignete Wahl der entsprechenden elektrischen Größen bei sonst konventionellem Schaltungsaufbau. Sie ist im Gegenteil verkörpert in der erfindungsgemäßen Schalteinrichtung, d. h. in einem geeignet im Primärkreis angeordneten Schalter mit einer für das erfindungsgemäße Verfahren charakteristischen Ansteuereinrichtung.

Ob bei dem Flußwandler-Vorschaltgerät in ausreichend kurzer Zeit ein ausreichend vollständiges Abfließen der Ladung von der Entladungslampe möglich ist, hängt von der Frequenz der beabsichtigten Schwingung ab. Erfindungsgemäß sind hier Frequenzen im Bereich von zumindest 100 kHz bevorzugt, damit ein ausreichend schneller Ladungsabfluß erzielt werden kann. Besonders bevorzugt sind Frequenzen von zumindest 200 kHz bzw. 300 kHz.

Allerdings ist es bei der Erfindung nicht festgelegt, wie die Zeitspanne zwischen der "Hinzündung" und der Rückzündung im Sinne des bereits zitierten Grundlagenverfahrens der gepulsten Betriebsweise zu bewerten ist. Es bieten sich im Grunde zwei alternative Möglichkeiten. Im einen Fall werden beide zusammengehörigen Pulse als einheitliche Wirkleistungseinkopplung betrachtet, die von einer deutlich kürzeren Zeitspanne als die entsprechenden Totzeiten nach diesem Verfahren voneinander getrennt sind. Dazu sollte die Schwingungsfrequenz über den oben erwähnten Werten liegen.

Andererseits ist es jedoch auch möglich, den Sekundärkreis sehr langsam durchschwingen zu lassen, was insbesondere bei sehr großen Lampenkapazitäten, also vor allem bei sehr großen Lampen, sinnvoll sein kann. Dann kann die Zeitperiode zwischen der ersten Zündung und der Rückzündung auch als Totzeit aufgefaßt werden, also typischerweise im Bereich von 5 µs bis 1 ms liegen. Hierzu ist es jedoch notwendig, daß die zeitliche Verzögerung, mit der die innere Gegenpolarisation in der Entladungslampe dem Abbau der äußeren Spannung folgt, ausreichend groß ist. Dazu sind Eigenfrequenzen des Sekundärkreises von höchstens 33 kHz, besser 15 bzw. 10 kHz bevorzugt.

Im Zusammenhang mit der bereits erwähnten Möglichkeit, über den Transformator selbst eine Rückspeisung von Energie aus dem Sekundärkreis in den Primärkreis vorzunehmen, ist es von Bedeutung, den primärkreisseitigen Stromfluß durch den Transformator nach der ersten Zündung zuzulassen oder zu unterbinden. Wird dieser Stromfluß durch einen leitenden Zustand eines entsprechenden Schalters zugelassen, kommt es im Zusammenhang mit dem Rückschwingen des Sekundärkreises und dem damit verbundenen Abfluß der Ladungen von der Entladungslampe zu einer induktiven Kopplung an den Primärkreis und damit zu einer Energierückspeisung.

Diese Energierückspeisung steht der Erfindung im Prinzip nicht im Wege, verringert jedoch die für die Rückzündung zur Verfügung stehende Energie im Sekundärkreis. Im Sinne dieser Erfindung ist es bevorzugt, möglichst viel der im Sekundärkreis nach der ersten Zündung verbleibenden Energie in der Rückzündung in Lichterzeugung umzusetzen, so daß vorzugsweise der primärkreisseitige Stromfluß durch den Transformator nach der ersten Zündung alsbald unterbrochen wird. So kann eine Rückspeisung aus dem Sekundärkreis in den Primärkreis entsprechend unterdrückt oder verringert werden.

Hinsichtlich der konkreten technischen Ausgestaltung des Vorschaltgerätes hat es sich als sehr günstig herausgestellt, den Primärkreis aus einer Quelle mit Leistung zu versorgen, die einen keramischen Mehrschichtkondensator als Speicherkondensator aufweist. Damit sind zwei wesentliche Vorteile verbunden. Zum einen ergeben sich bei diesen Kondensatoren deutlich verringerte Rückstreuungen von hochfrequenten Störungen aus dem Vorschaltgerät in das Versorgungsnetz. Die keramischen Mehrschichtkondensatoren weisen sozusagen eine Tiefpaßfilterwirkung auf. Weiterhin haben solche Kondensatoren sehr niedrige innere Widerstände und erlauben somit einen schnellen Aufbau entsprechender Versorgungsströme für den Transformator in dem Primärkreis. Ferner zeigen sie wesentlich längere Lebensdauern als die üblicherweise eingesetzten Elektrolytkondensatoren.

Wie bereits verschiedentlich erwähnt, kann durch einen Schalter in dem Primärkreis und entsprechend gesteuerten Stromfluß durch die Primärkreisseite des Transformators das gesamte Vorschaltgerät und damit auch der Betrieb der Entladungslampe getaktet werden. Eine solche Primärkreistaktung ist bei dieser Erfindung eine bevorzugte Wahl. Es muß jedoch angemerkt werden, daß auch andere Möglichkeiten einer Taktung des Vorschaltgerätes und der Entladungslampe im Bereich der Erfindung liegen, etwa durch eine Schalteinrichtung im Sekundärkreis.

Eine weitere bevorzugte Ausgestaltung der Erfindung betrifft eine Sekundärwicklung des Transformators mit einem Mittenabgriff, bei der durch eine Wahl des Mittenabgriffpotentials als erdfreies Bezugspotential im Sekundärkreis und Versorgung der Entladungslampe durch die zu diesem Bezugspotential positiven und negativen Spannungen an den äußeren Abgriffen der Sekundärwicklung Sicherheitsverbesserungen und eine Verbesserung der elektromagnetischen Verträglichkeit erreicht werden können. Dies liegt im wesentlichen daran, daß im Sekundärkreis im Hinblick auf die Hochspannungsgefährdung und auf die elektromagnetische Abstrahlung im wesentlichen die halbe tatsächlich an die Entladungslampe angelegte Spannung auftritt. Des weiteren heben sich die abgestrahlten Störsignale infolge der gegenläufigen Flanken teilweise auf.

Bislang war von einem aus dem Primärkreis über den Transformator in den Sekundärkreis eingeprägten Spannungspuls die Rede, der zu einer äußeren Spannung an der Entladungslampe führt. Dabei ist die Erfindung nicht darauf festgelegt, ob zeitlich aufeinanderfolgende äußere Spannungspulse an der Entladungslampe immer das gleiche Vorzeichen haben oder in irgendeiner Weise einen Vorzeichenwechsel durchführen. In vielen Fällen ist es bevorzugt, mit einem unipolaren Betriebsverfahren zu arbeiten, bei dem die durch einen Spannungspuls erzeugte äußere Spannung an der Entladungslampe immer das gleiche Vorzeichen hat. Dabei ist also die Stromrichtung einer "Hinzündung" immer die gleiche. Ein Vorteil dieses Verfahrens liegt z. B. darin, daß hinsichtlich der Elektrodenstruktur der Entladungslampe zwischen Kathoden und Anoden unterschieden werden kann, wobei nur die Anoden eine dielektrische Schicht zur Trennung von dem Entladungsmedium aufweisen müssen.

Andererseits kann aber auch ein bipolares Betriebsverfahren bevorzugt sein, bei dem das Vorzeichen der äußeren Spannung an der Entladungslampe von Spannungspuls zu Spannungspuls alternierend wechselt. Allerdings müssen dabei Entladungslampen verwendet werden, bei denen alle Elektroden als Anode geeignet sind, also eine dielektrische Schicht aufweisen.

Ein Vorteil eines bipolaren Betriebsverfahrens kann beispielsweise in einer über das erfindungsgemäße Rückzündungsprinzip noch weiter hinausgehenden Symmetrisierung der Entladungsverhältnisse in der Lampe liegen. Damit werden durch asymmetrische Entladungsverhältnisse hervorgerufene Probleme besonders wirkungsvoll vermieden, z. B. lonenwanderungen im Dielektrikum, die zu einer Schwärzung führen können, oder die Effizienz der Entladung verschlechternde Raumladungsakkumulationen.

Im Hinblick auf das erfindungsgemäße Betriebsverfahren ist es, wenn ein bipolarer Betrieb beabsichtigt ist, bevorzugt, hierzu für eine Richtungsumkehr des den Spannungspuls im Sekundärkreis bewirkenden primärkreisseitigen Stromes in dem Transformator zu sorgen. Dies ist im allgemeinen einfacher als entsprechende elektrotechnische Maßnahmen zur Richtungsumkehr auf der Sekundärkreisseite zu treffen.

Insbesondere kann der Transformator hierzu zwei primärkreisseitige Wicklungen aufweisen, die jeweils einer der beiden Stromrichtungen zugeordnet sind, also für einen Primärkreisstrom nur einer der beiden Richtungen verwendet werden. Das bedeutet, daß die beiden primärkreisseitigen Wicklungen alternierend mit Strom beaufschlagt werden. Beispielsweise kann dies durch Verwendung zweier taktender Schalter in dem Primärkreis geschehen, die jeweils den Strom durch eine zugeordnete der beiden Wicklungen takten.

Damit ist jeder der beiden Stromrichtungen ein eigener Taktschalter und eine eigene primärkreisseitige Wicklung des Transformators zugeordnet.

Wenn ein erfindungsgemäßes Vorschaltgerät an einer Wechselstromquelle verwendet wird, kann es von Vorteil sein, im Hinblick auf die beiden primärkreisseitigen Stromrichtungen zwei Speicherkondensatoren zu verwenden, die halbperiodenweise alternierend aus der Wechselstromquelle aufgeladen werden. Es werden also die Wechselstromhalbperioden eines Vorzeichens für einen der Speicherkondensatoren und die Wechselstromhalbperioden des anderen Vorzeichens für den anderen Speicherkondensator verwendet. Aus diesen beiden Speicherkondensatoren können dann die Ströme für jeweils eine Richtung entnommen werden. Dies kann zusammen mit der geschilderten doppelten Ausführung der Primärkreiswicklung des Transformators geschehen, jedoch ist eine solche hier eigentlich nicht notwendig.

Vielmehr kann eine einzige primärkreisseitige Wicklung durch entsprechende Schalter alternierend von den beiden Speicherkondensatoren versorgt werden, wobei jeder Speicherkondensator jeweils einer Stromrichtung zugeordnet ist. Zur Speisung der Speicherkondensatoren aus der Wechselstromquelle kann eine entsprechende Gleichrichterschaltung verwendet werden, deren Einzelheiten dem Fachmann ohne weiteres klar sind.

### Beschreibung der Zeichnungen

Im Folgenden wird die Erfindung anhand konkreter Ausführungsbeispiele im einzelnen erläutert. Die dabei offenbarten Merkmale können auch jeweils einzeln oder in anderen als den dargestellten Kombinationen erfindungswesentlich sein. In den Figuren zeigt:
Figur 1 ein schematisches Blockschaltbild eines erfindungsgemäßen Beleuchtungssystems;
Figur 2 ein schematisches Ersatzschaltbild für die Entladungslampe aus Figur 1;
Figur 3 ein stark vereinfachtes Diagramm zur Veranschaulichung des Zusammenhangs zwischen der äußeren Spannung und der inneren Gegenpolarisation an und in der Entladungslampe;
Figur 4 ein stark vereinfachtes Diagramm zur Veranschaulichung des Grundprinzips des erfindungsgemäßen Flußwandler-Vorschaltgeräts;
Figur 5 beispielhafte Meßkurven für einen tatsächlichen Betrieb eines erfindungsgemäßen Flußwandler-Vorschaltgeräts;
Figur 6 ein Diagramm mit weiteren beispielhaften Meßkurven für den tatsächlichen Betrieb des erfindungsgemäßen Flußwandler-Vorschaltgeräts;
Figur 7 ein Diagramm mit Meßkurven für die äußere Spannung an und den Strom durch die Entladungslampe bei einer gegenüber den Figuren 5 und 6 im einzelnen abweichenden, jedoch erfindungsgemäßen Betriebsweise;
Figur 8 ein Figur 1 entsprechendes schematisches Blockschaltbild eines weiteren erfindungsgemäßen Beleuchtungssystems; und
Figur 9 ein Figur 7 entsprechendes Diagramm mit Meßkurven für die äußere Spannung an und den Strom durch die Entladungslampe beim Beleuchtungssystem nach Figur 8.

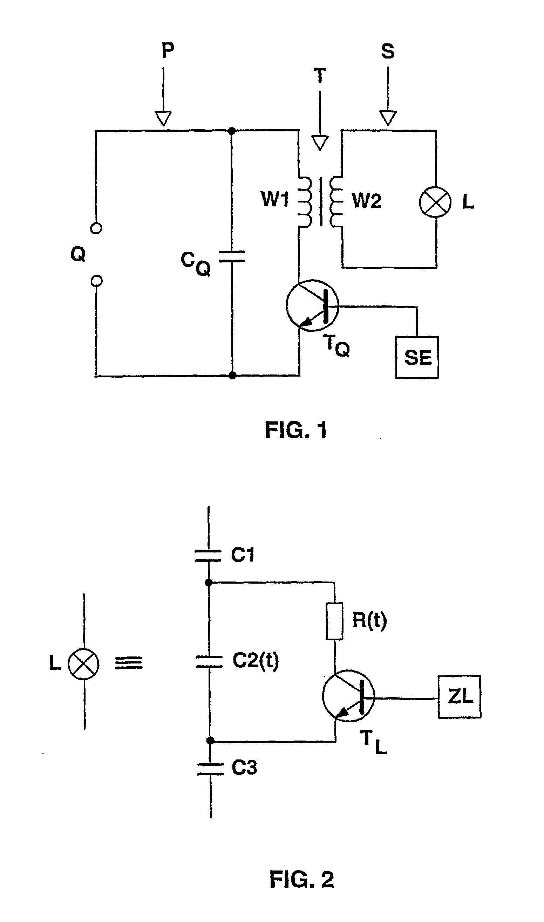

In Figur 1 ist ein schematisches Blockschaltbild für ein erfindungsgemäßes Beleuchtungssystem dargestellt. Darin ist zunächst mit L eine Entladungslampe dargestellt, die für dielektrisch behinderte Entladungen ausgelegt ist. Ein prinzipielles Ersatzschaltbild für die Entladungslampe L wird im Folgenden noch anhand Figur 2 erläutert. Für das Verständnis des erfindungsgemäßen Betriebsverfahrens, Beleuchtungssystems und Vorschaltgeräts ist der tatsächliche Aufbau der Entladungslampe L nicht entscheidend.

Die Entladungslampe L ist in einen Sekundärkreis S geschaltet, der neben der Entladungslampe L eine Sekundärwicklung W2 eines Transformators T enthält.

Die Primärwicklung W1 des Transformators T liegt in einem Primärkreis P, der aus einer Leistungsversorgung Q mit Leistung für den Transformator bzw. die Entladungslampe L versorgt ist.

Ferner liegt in einem der Äste zwischen der Leistungsquelle Q und der Primärwicklung W1 ein schneller Schalter T_{Q}. Dabei handelt es sich um einen Leistungs-MOSFET, der von einer Steuereinrichtung SE geschaltet bzw. gesteuert ist.

Parallel zu der Reihenschaltung aus der Primärwicklung W1 und dem Schalter T_{Q} liegt ein Speicherkondensator C_{Q}. Dieser Speicherkondensator C_{Q} wird von der Quelle Q nachgeladen, gehört im Grunde zu der Quelle Q und dient zum Anlegen einer Spannung an die Primärwicklung W1 abhängig von dem Schaltzustand des Schalters T_{Q}. Es handelt sich dabei um keramische Mehrschichtkondensatoren.

Bei dem Flußwandler wird in zunächst konventioneller Weise ein Stromfluß durch die Primärwicklung W1 erzeugt, wobei das Wicklungsverhältnis des Transformators T so ausgelegt ist, daß der Stromfluß durch die Primärwicklung W1 in der Sekundärwicklung W2 und damit mittelbar an der Entladungslampe L eine Zündspannung induziert. Wird der Schalter T_{Q} durch die Steuereinrichtung SE geöffnet, so verbleibt im Sekundärkreis S Energie zumindest in Form einer Restmagnetisierung des Transformators T.

Wie bereits in der Beschreibungseinleitung erläutert, sind zum Abbau dieser Restmagnetisierung konventionellerweise Entmagnetisierungsschaltungen verwendet worden, die z. B. aus einer dritten Wicklung des Transformators T und einer mit dieser Wicklung parallel zu der Reihenschaltung aus der Primärwicklung W1 und dem Schalter T_{Q} geschalteten Diode bestehen könnte. Über eine solche Entmagnetisierungsschaltung könnte dann in der Sperrphase des Schalter T_{Q} die Restmagnetisierung des Transformators T abgebaut werden.

Aus Figur 1 ergibt sich direkt, daß zwischen dem Primärkreis P und dem Sekundärkreis S eine vollständige galvanische Trennung vorliegt. Dies ist von erheblichem Sicherheitsvorteil im Hinblick auf die auf der Sekundärkreisseite vorliegenden hohen Spannungen. Ein weiterer Sicherheitsvorteil kann dadurch erzielt werden, daß die Sekundärwicklung W2 einen (dritten) Mittenabgriff aufweist, der als "floatendes", also erdfreies, Bezugspotential des Sekundärkreises S dienen kann. Wenn demgegenüber an die jeweiligen Elektrodengruppen der Entladungslampe L die positiven und negativen Pulse aus der Sekundärwicklung W2 angelegt werden, liegt an der Entladungslampe L nach wie vor die volle Induktionsspannung an, obwohl in der Sekundärkreisschaltung gegenüber dem Mittenabgriffspotential jeweils nur die halbe maximale Spannung als sicherheitsrelevante Spannung auftritt.

Diese Technik verbessert auch erheblich die elektromagnetische Verträglichkeit hinsichtlich der Abstrahlung aus dem Sekundärkreis. Es wird verwiesen auf die DE 197 34 885.8.

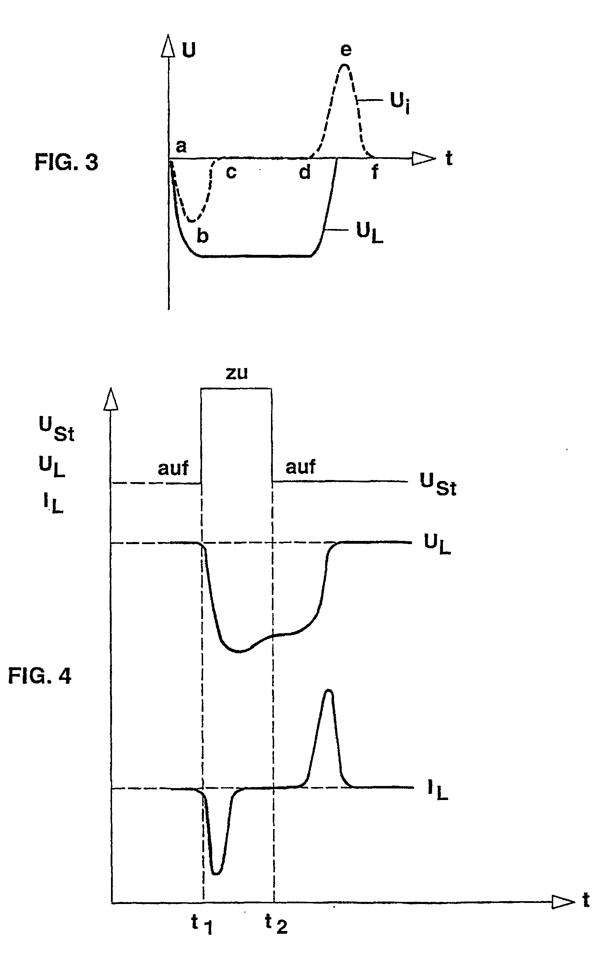

Bevor nun die erfindungsgemäße Ausführung des in Figur dargestellten Beleuchtungssystems beschrieben wird, soll zunächst anhand der Figuren 2 und 3 das elektrische Verhalten der Entladungslampe L näher betrachtet werden. Bei dem bereits beschriebenen Zündvorgang erzeugt der Transformator T eine an der Entladungslampe L anliegende Spannung, die der Zeitableitung des primärkreisseitigen Transformatorstroms proportional ist. Dabei ist das Beleuchtungssystem so ausgelegt, daß die Stromableitung zusammenwirkend mit dem Übersetzungsverhältnisses des Transformators T nach dem Schließen des Schalters T_{Q} eine ausreichend hohe äußere Spannung an der Entladungslampe L erzeugt, um diese durchzünden zu lassen.

In dem Entladungsmedium der Entladungslampe L bilden sich Entladungen aus, in denen sich Ladungsträger zu der dielektrischen Schicht auf den Elektroden bewegen. In diesem Zusammenhang werden bevorzugt Gasentladungslampen betrachtet, in deren Gasraum die Elektronen die bei weitem beweglicheren Ladungsträger sind und somit die Entladungsdynamik gegenüber den Ionenrümpfen praktisch allein bestimmen. Wenn sich die Elektronen zu der dielektrischen Schicht auf der Anode bewegt haben, stauen sie sich auf der Oberfläche der dielektrischen Schicht auf und schirmen zunehmend das durch die äußere Spannung erzeugte elektrische Feld ab.

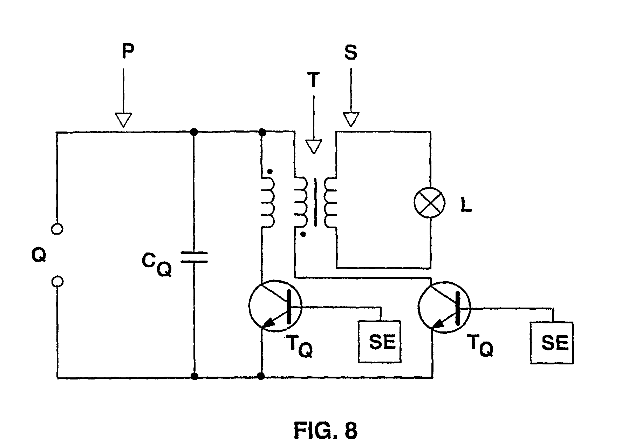

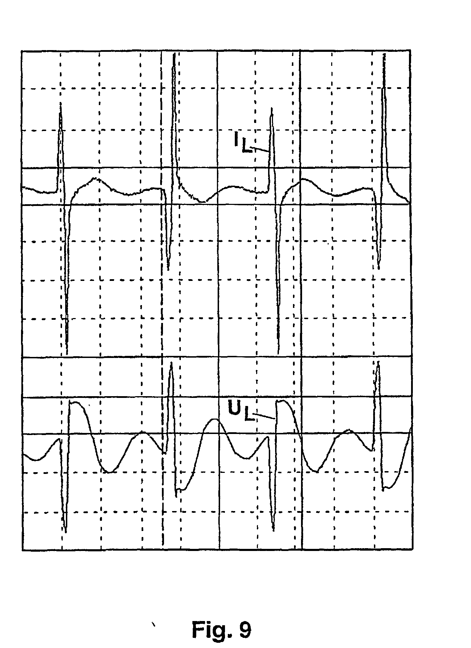

In diesem Zusammenhang ist anzumerken, daß bei der in Figur 1 dargestellten Schaltungsvariante die äußere Spannung immer die gleiche Polarität hat, insoweit eine Anode in der Entladungslampe L festgelegt ist. Wie bereits erwähnt, schränkt dies die Erfindung jedoch nicht auf unipolare Betriebsverfahren ein; vielmehr sind im Bereich der Erfindung auch bipolare Verfahren und Beleuchtungssysteme inbegriffen, bei denen die Polarität der äußeren Spannung alterniert, die Elektroden also in der Anoden- und der Kathodenrolle abwechselnd betrieben werden. Dies wird anhand der Figuren 8 und 9 noch erläutert.

Um auf die soeben beschriebene Abschirmung des durch die äußere Spannung erzeugten Feldes zurückzukommen, so erfolgt diese mit einer durch verschiedene Parameter der Entladungslampe L (Druck und Zusammensetzung der Entladungsatmosphäre, Elektrodengeometrie, Abmessungen des Entladungsvolumens...) festgelegten Zeitverzögerung. Diese Abschirmung läßt dann die Entladung in der Entladungslampe L erlöschen, obwohl die äußere Spannung über der notwendigen Zündspannung liegt.

Dies ist in dem vereinfachten Diagramm in Figur 3 zu erkennen. Dort ist auf der Abszisse die Zeit t und auf der Ordinate die Spannung U aufgetragen. Dabei zeigt die durchgezogene Linie die äußere Spannung U_{L} und die gestrichelte Linie die durch die Superposition der äußeren Spannung U_{L} und der inneren Gegenpolarisation resultierende innere Spannung Uᵢ, die dem tatsächlich in dem Entladungsmedium herrschenden Feld entspricht.

Der bisherigen Beschreibung entsprechend ist die äußere Spannung U_{L} von dem Punkt a ausgehend, in dem Diagramm in Figur 3 zu negativen Werten hin, schnell angestiegen, während sich die innere Spannung Uᵢ von a ausgehend zunehmend von der äußeren Spannung U_{L} abgekoppelt hat. In dem Verlauf von a nach b zündet das Plasma. Auch vor der Plasmazündung kommt es zu einer inneren Gegenpolarisation und damit zu einem Abweichen der inneren Spannung Uᵢ von der äußeren Spannung U_{L}. Im Punkt b kehrt die innere Spannung in der Zeitableitung um und wird durch die zunehmende innere Gegenpolarisation wieder kleiner, bis sie bei c den Wert Null erreicht. Bei diesem Beispiel kehrt die innere Spannung Uᵢ um, bevor die äußere Spannung U_{L} ihr Maximum erreicht.

Der besseren Verständlichkeit halber ist das Maximum der äußeren Spannung U_{L} etwas übertrieben breit eingezeichnet. Damit soll verdeutlicht werden, daß in der Lampe Feldfreiheit herrscht und keine Entladung mehr aufrecherhalten werden kann, während die äußere Spannung U_{L} noch große Werte, möglicherweise auch den Maximalwert, aufweist.

In dem Ersatzschaltbild aus Figur 2 bedeutet dies, daß die Eniladungslampe L von einem Verbraucherverhalten als zeitabhängiger Ohmscher Widerstand R (t) mit dem Erlöschen der Entladung zu einem rein kapazitiven Verhalten als Kondensator übergewechselt ist. Dies kann man sich in dem Diagramm in Figur 2 durch einen Schaltvorgang des modellhaften Schalters T_{L} vorstellen, der gewissermaßen durch eine Zündlogik ZL der Entladungslampe L gesteuert ist. Die in dem Schaltdiagramm in Figur 2 weiterhin eingezeichneten Kapazitäten C1 und C3 sind Kapazitäten der Elektroden und der zumindest auf den Anoden aufgebrachten dielektrischen Schicht. Dielektrische Schichten können dabei auch sowohl auf den Anoden als auch auf den Kathoden vorliegen.

Im ungezündeten oder bereits nicht mehr gezündeten Zustand wirkt die Entladungslampe L also als Reihenschaltung von Kondensatoren.

Ein wesentlicher Punkt der Erfindung liegt nun darin, das Gesamtsystem (hier als Beleuchtungssystem bezeichnet) aus der Entladungslampe L und dem Vorschaltgerät so abzustimmen, daß die hinsichtlich der Reaktion der inneren Gegenpolarisation auftretende Zeitkonstante für die beabsichtigte Rückzündung ausgenützt werden kann. In Figur 3 ist dies im rechten Teil zu erkennen, bei dem durch das Absinken der äußeren Spannung U_{L} die nicht unmittelbar folgend abnehmende innere Gegenpolarisation dann eine in die entgegengesetzte Richtung, also in Figur 3 zu positiven Spannungen hin, auf ein Niveau oberhalb der Zündspannungsgrenze ansteigende innere Spannung Uᵢ aufbaut. Dies zeigt sich in dem Ansteigen der gestrichelten Kurve der inneren Spannung Uᵢ zwischen den Punkten d und e.

Nach dem Absinken der äußeren Spannung U_{L} fällt die innere Spannung, also in diesem Fall verschwindender äußerer Spannung U_{L} die innere Gegenpolarisation, von dem Punkt e zu dem Punkt f wieder ab. Dabei muß der Punkt des Verschwindens der äußeren Spannung U_{L} nicht unbedingt mit dem Maximum der inneren Spannung Uᵢ zusammentreffen. Wesentlich ist nur, daß die äußere Spannung U_{L} so schnell abfällt, und daß die innere Gegenpolarisation vergleichsweise so langsam reagiert, daß die Zündspannung in umgekehrter Richtung ein weiteres Mal überschritten werden kann.

Bei dem in Figur 2 dargestellten Ersatzschaltbild für die Entladungslampe L bedeutet der Zeitverlauf von d bis f in Figur 3 ein Wiedereinschalten des Schalters T_{L} durch die Zündlogik ZL, wobei hier jedoch der zeitabhängige Widerstand R(t) formal negative Werte annimmt.

Figur 4 verdeutlicht nun, wie das in Figur 1 dargestellte Beleuchtungssystem den Abfall der äußeren Spannung U_{L} erfindungsgemäß erreicht. Im oberen Bereich der Figur ist die Steuerspannung Uₛₜ an dem Schalter T_{Q} in Figur 1, also das Ausgangssignal Uₛₜ der Steuereinrichtung SE, dargestellt, wobei der hohe Pegel von Uₛₜ einem geschlossenen Zustand des Schalters T_{Q} entspricht.

Durch das Schließen des Schalters T_{Q} erzeugt der Flußwandler eine Induktionsspannung in der Sekundärwicklung W2 und damit eine äußere Spannung U_{L} an der Entladungslampe L. Dies entspricht dem starken Anstieg der mittleren Kurve in Figur 4 zu negativen Werten hin. Gleichzeitig steigt der in der unteren Kurve dargestellte Lampenstrom I_{L} analog der Darstellung der inneren Spannung Uᵢ in Figur 3 in negativer Richtung. Dieser erste negative Peak des Lampenstroms I_{L} nach dem Zeitpunkt t₁ entspricht der ersten Zündung.

Erfindungsgemäß wird der Schalter T_{Q} durch die Steuereinrichtung SE im Bereich des negativen Maximums der Lampenspannung U_{L} oder, wie in Figur 4 auch der besseren Deutlichkeit halber dargestellt, etwas danach geöffnet, in Figur 4 im Zeitpunkt t₂. Dadurch ist ein primärkreisseitiger Stromfluß durch die Primärwicklung W1 des Transformators T unterbrochen und der Sekundärkreis S isoliert. Der Sekundärkreis S verhält sich nun als Schwingkreis aus im wesentlichen der Induktivität der Sekundärwicklung W2 des Transformators T und einer Gesamtkapazität aus den in Figur 2 dargestellten Kapazitäten C1, C2 und C3 der Entladungslampe L und einer Kapazität der Sekundärwicklung W2.

Der in Figur 4 an den Zeitpunkt t₂ anschließende Verlauf der Lampenspannung U_{L} soll ein diesem freien Schwingen des Sekundärkreises S entsprechendes Zurückfließen der mit der äußeren Spannung U_{L} an der Entladungslampe L kapazitiv gekoppelten Ladung von der Entladungslampe L durch die Sekundärwicklung W2 darstellen. Dieses Abfallen der äußeren Spannung U_{L} entspricht dem rechten Bereich der modellhaften Darstellung in Figur 3. Dementsprechend entsteht durch die verbleibende innere Gegenpolarisation in der Entladungslampe L eine innere Spannung Uᵢ, die zu einer Rückzündung der Entladungslampe L in umgekehrter Richtung führt. Dies zeigt der zweite, nun positive Peak des Lampenstroms I_{L} in Figur 4. Man beachte, daß es trotz einer unipolaren äußeren Wirkleistungseinprägung zu einer grundsätzlich bipolaren Wirkleistungsumsetzung in der Entladungslampe L selbst kommt.

Nach der Rückzündung beginnt der in Figur 4 schematisch dargestellte Ablauf mit einem erneuten Einschalten des Schalters T_{Q} durch die Steuereinrichtung SE von neuem. Dabei richtet sich die Erfindung bevorzugt auf den Fall, daß die bis zu einem erneuten Einschalten des Schalters T_{Q}, also einer erneuten "ersten Zündung" ablaufende Zeit einer Totzeit im Sinne der hier betrachteten gepulsten Betriebsweise entspricht. Demgegenüber sollte die zwischen der ersten Zündung und der Rückzündung liegende Zeit möglichst kurz sein. Dann sind die beiden Zündpulse in Figur 4 im Sinne der gepulsten Betriebsweise als einheitliche Wirkleistungseinkopplung zu werten.

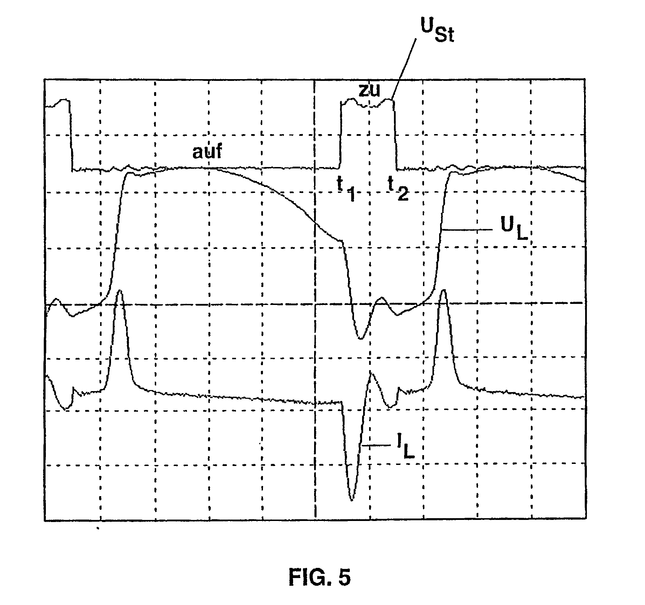

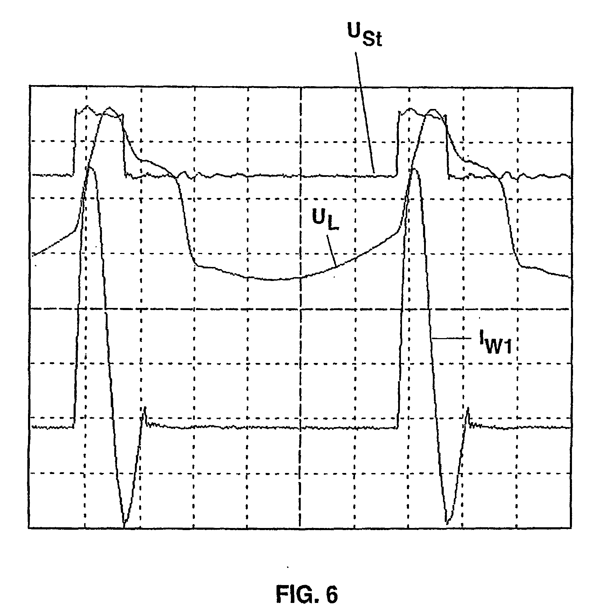

Deutlicher ist dies zu sehen aus den tatsächlichen Meßkurven in den Figuren 5 und 6. Darin sind dargestellt die Steuerspannungen U_{St} an dem Schalter T_{Q}, die äußere Lampenspannung U_{L}, die in Figur 6 gegenüber den Figuren 3, 4 und 5 invertiert ist, der Lampenstrom I_{L}, sowie der primärkreisseitige Transformatorstrom I_{W1}. Eine Zeiteinheit in den Diagrammen in Figur 5 und 6, d. h. der Abstand zwischen den gepunkteten Linien, beträgt 2 µs, der gesamte dargestellte Bereich also 20 µs.

Man erkennt das Grundprinzip aus Figur 4 wieder in der Darstellung in Figur 5, wobei jedoch der äußeren Lampenspannung U_{L} und dem Lampenstrom I_{L} in dem Bereich zwischen der ersten Zündung und der Rückzündung eine gedämpfte Oberschwingung überlagert ist. Dieser Effekt ist parasitär, stört das erfindungsgemäße Prinzip nicht qualitativ, und soll hier nicht weiter erläutert werden.

Auch ist die Lampenspannung in der Totzeit zwischen einer Rückzündung und der nächsten ersten Zündung nicht konstant auf Null, sondern zeigt eine leichte Restschwingung eines in dem Sekundärkreis S verbleibenden Energiebetrages mit einer relativ kleinen Frequenz. Diese Frequenz weicht übrigens von der Frequenz des Rückschwingens der äußeren Lampenspannung U_{L} im Bereich der Rückzündung deswegen ab, weil der (modellhafte) zeitabhängige Widerstand R(t) aus Figur 2 im Bereich der Totzeit praktisch unendlich ist, beziehungsweise der Schalter T_{L} in dieser Zeit durchweg offen ist. Demgegenüber hat die Entladungslampe L im Bereich der Rückzündung eine leitende Phase. Im übrigen ist auch ihre Kapazität C2(t) jeweils verschieden.

Die Ähnlichkeit der zeitlichen Verläufe des Lampenstroms I_{L} und der inneren Spannung Uᵢ zeigt, daß der Strom durch die Lampe von der inneren Spannung bzw. von der tatsächlich innen herrschenden Feldstärke getrieben wird. Von den in diesen Figuren nicht aufgelösten Vorgängen des Zündens und Erlöschens der Entladungen selbst und der Zeitveränderlichkeit des Entladungswiderstandes abgesehen stehen die innere Spannung und der Lampenstrom damit in einem direkten Zusammenhang.

In Figur 6 erkennt man an dem Primärwicklungsstrom Iwi neben dem die erste Zündung "triggernden" Hauptpuls im Anfangsbereich der leitenden Phase des Schalters T_{Q}, also der Hochpegelphase der Spannung Uₛₜ, einen zweiten kleineren Puls zur entgegengesetzten Seite. Dieser Effekt geht zurück auf eine Energierückführung in der verbleibenden Zeitphase des geschlossenen Zustandes des Schalters T_{Q} nach der ersten Zündung, und zwar aus dem Sekundärkreis S vermittelt über den Transformator T in den Primärkreis P. Diese Energierückführung entspricht einer Rückinduktion durch die bereits von der Entladungslampe L abfließende Ladung, wie durch das bereits erkennbare Abfallen des Signals U_{L} zu sehen. Nach dem Maximum des Primärwicklungsstroms I_{w1} kehrt seine Ableitung um, so daß die Induktionsspannung an der Primärwicklung W1 ihre Polarität wechselt.

Dieser Effekt stört die Erfindung grundsätzlich nicht, sollte jedoch vorzugsweise nicht zu stark ausgeprägt sein. Er ist in Figur 6 im Grunde nur der besseren Verständlichkeit halber dargestellt.

Das Rückschwingen der äußeren Lampenspannung U_{L} entspricht zwar zunächst einer weitgehend freien Schwingung des isolierten Sekundärkreises S, ist jedoch durch die Rückzündung dann stark bedämpft. Die Bedämpfung durch die Rückzündung reduziert die durch das Rückschwingen zu dem Transformator T im Sinne einer Magnetisierung des Transformators T transportierte Energie erheblich. Dieser Effekt entspricht der Entmagnetisierung des Transformators T durch die Rückzündung im Sinn der Erfindung. Durch diesen dissipativen Prozeß wird die gewissermaßen unvermeidlicherweise im Sekundärkreis S in der Entladungslampe L bei der ersten Zündung kapazitiv gespeicherte Energie (einschließlich der Remanenzenergie des Transformatorkerns) deutlich reduziert, womit die Notwendigkeit zusätzlicher Entmagnetisierungsschaltungen entfällt.

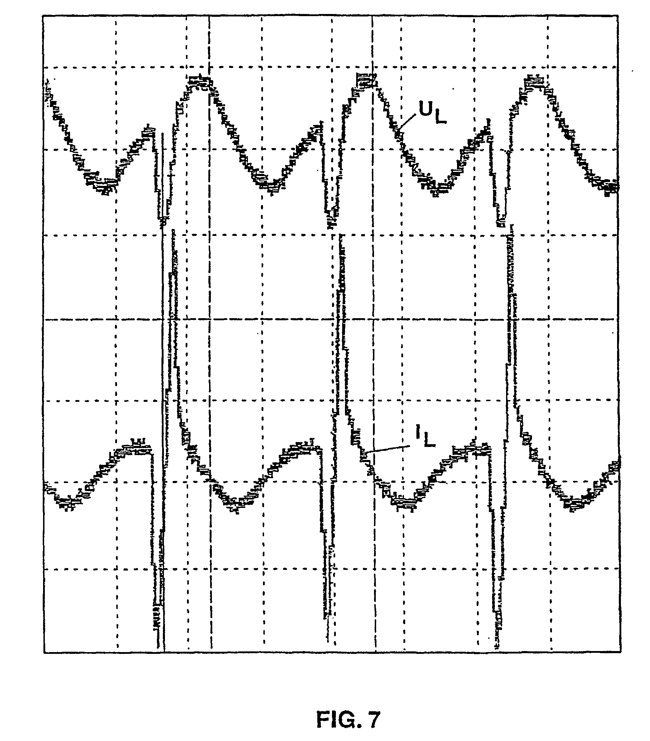

Figur 7 zeigt ein weiteres, von den Figuren 5 und 6 abweichendes Beispiel zu einem möglichen Zeitverlauf der äußeren Lampenspannung U_{L} und des Lampenstroms I_{L} gemäß der Erfindung. Um einige Perioden des Betriebsverfahrens darstellen zu können, sind in Figur 7 Zeitabstände von 5 µs zwischen den gepunkteten Linien gewählt. Dieses Beispiel in Figur 7 illustriert zwei wesentliche Punkte. Zum einen ist eine sehr viel glattere Struktur des negativen Peaks der Spannung U_{L} zu erkennen. Dies bedeutet, daß hier der Schalter T_{Q} sehr viel näher an dem negativen Maximum der äußeren Lampenspannung U_{L} geöffnet wurde, d. h. die in den Spannungsverläufen U_{L} in den Figuren 4, 5 und 6 relativ breite Schulter zum Rückschwingen hin schmaler ausfällt. Grundsätzlich kann der Schalter T_{Q} sogar vor dem Erreichen des möglichen negativen Maximums von U_{L} geöffnet werden.

Dementsprechend liegen die Peaks der jeweiligen ersten Zündung und Rückzündung im Lampenstrom I_{L} dichter beieinander und sind durch keinen erkennbaren Bereich kleinerer Ströme voneinander getrennt. Damit illustriert dieses Beispiel, daß bei der Erfindung die Wirkleistungseinkopplung trotz im Prinzip getrennter Hin- und Rückzündungen in der Praxis nahe zusammengezogen werden kann, so daß sich daraus im Sinne der gepulsten Wirkleistungseinkopplung ein einheitlicher Wirkleistungspuls ergibt.

Zum zweiten fallen die starken sinusähnlichen Grundschwingungen der beiden in Figur 7 dargestellten Kurven auf, die zueinander um π/2 phasenverschoben sind. Dabei handelt es sich um eine im Vergleich zu der bereits anhand Figur 5 erläuterten Restschwingung des Sekundärkreises S sehr viel ausgeprägtere, weitgehend wirkleistungsfreie Restschwingung in dem Sekundärkreis S, bei der ein Restenergiebetrag, der durch die Rückzündung "übrig gelassen wird", zwischen der Entladungslampe L als Kondensator und der Sekundärwicklung W2 als Induktivität schwingt. Figur 7 soll verdeutlichen, daß solche Restschwingungen, wenngleich sie nachteilig sind, das Grundprinzip der Erfindung solange nicht stören, wie die damit verbundenen Amplituden bzw. Flankensteilheiten der äußeren Lampenspannung nicht zu unerwünschten Zündungen in der eigentlichen Totzeit führen.

Figur 8 zeigt ein schematisches Schaltdiagramm, das weitgehend Figur 1 entspricht. Hier ist jedoch ein Ausführungsbeispiel gezeigt, das für ein bipolares Betriebsverfahren ausgelegt ist. Es werden also äußere Spannungspulse alternierender Polarität an die Entladungslampe L angelegt. Dazu weist der Transformator T zwei Primärwicklungen auf, die in Figur 8 mit entgegengesetztem Wicklungssinn eingezeichnet sind. Jede der Primärwicklungen liegt elektrisch in Reihe mit einem zugeordneten Schalttransistor T_{Q} mit einer eigenen Steuereinrichtung SE. Natürlich können die beiden Steuereinrichtungen auch als zwei Funktionen einer einheitlichen Steuereinrichtung verstanden werden; symbolisiert werden soll nur, daß die beiden Primärwicklungen nicht gemeinsam, sondern alternierend getaktet werden. Durch die Wicklungssinnumkehr zwischen den beiden Primärwicklungen erzeugt der Transformator T bei Taktung der Primärwicklungen jeweils Spannungspulse entgegengesetzter Polarität im Sekundärkreis S. Im übrigen entspricht die Funktion völlig dem vorherigen Ausführungsbeispiel, das in Figur 1 dargestellt ist. Zusammenfassend gesagt, ist bei der Schaltung aus Figur die Baugruppe aus der Primärwicklung W1, dem Schalter T_{Q} und der Steuereinrichtung SE doppelt ausgeführt, wobei durch den Wicklungssinn eine Vorzeichenumkehr bewirkt ist.

Figur 9 zeigt entsprechende reale Meßkurven der äußeren Lampenspannung U_{L} und des Lampenstromes I_{L}. Man erkennt große qualitative Ähnlichkeiten zu den Kurvenverläufen in Figur 7. Jedoch ist sowohl an den Zündpulsen der äußeren Lampenspannung als auch an den Lampenstrompulsen der Hinzündung und der Rückzündung erkennbar, daß es sich um ein bipolares Betriebsverfahren handelt. Im Unterschied zu der Lampenstromkurve aus Figur 7 ist hier der Rückzündungspuls mit etwas höherer Amplitude als der Hinzündungspuls ausgebildet. Hier liegt jedoch kein grundsätzlicher Zusammenhang mit dem bipolaren Betriebsverfahren vor.

In der dargestellten Weise nutzt die Erfindung die speziellen Eigenschaften einer Entladungslampe L mit dielektrisch behinderten Elektroden aus, um ein außerordentlich einfaches elektronisches Vorschaltgerät mit dennoch hervorragenden Betriebseigenschaften zur Verfügung zu stellen. Wesentlich ist dabei das besondere Schaltverhalten des Schalters T_{Q} infolge der Steuerung durch die Steuereinrichtung SE. Ferner spielt die geeignete Abstimmung der elektrotechnischen Größen und des Schaltverhaltens auf die jeweiligen Lampenparameter eine wesentliche Rolle. Daher betrifft die Erfindung neben dem Betriebsverfahren auch das entsprechend abgestimmte Beleuchtungssystem sowie ein mit der erfindungsgernäßen Steuereinrichtung versehenes Vorschaltgerät.

Neben der einfachen Struktur des Vorschaltgeräts hat dieses auch ein ganz erheblich geringeres Bauvolumen und geringeres Gewicht als der vergleichbare Stand der Technik, weil nicht nur weniger Bauteile verwendet werden, sondern auch eine Auslegung auf kleinere Leistungen insbesondere auf der Seite des Primärkreises P möglich ist.

Die kleine Baugröße hat bei einem Konstruktionsbeispiel zu einem Volumen geführt, das sich in einer einer Streichholzschachtel ähnlichen Gehäusekonstruktion unterbringen läßt. Dies bietet erhebliche Vorteile hinsichtlich der Einbaumöglichkeiten in Flachbildschirmen, bei denen die hier betrachteten Entladungslampen als Hinterleuchtungssysteme von großem Interesse sind. Ein wesentlicher Vorteil solcher Flachbildschirme besteht gerade in ihrer im Vergleich zu konventionellen Elektronenstrahlröhren geringen Baugröße, die folglich aber auch nur ein geringes Volumen für den Einbau eines Hinterleuchtungssystems übrig läßt. Die typischerweise sehr flach ausführbaren Flachstrahler mit dielektrisch behinderten Entladungen können dabei in Zusammenhang mit den erfindungsgemäßen Vorschaltgeräten sehr vorteilhaft eingesetzt werden.

Neben der möglichen Anwendung als Beleuchtungssystem für einen Flachbildschirm soll hier ein weiteres Beispiel angeführt werden. Dazu wird verwiesen auf die DE 197 18 395 C1, deren Offenbarungsgehalt in Bezug auf die Strukturen die Eigenschaften der dort beschriebenen Kopierlampe sowie deren Anwendungsmöglichkeiten hier inbegriffen ist. Die dort im Prinzip dargestellte Kopierlampe wurde mit folgenden konkreten Daten bei einem erfindungsgemäßen Beleuchtungssystem erprobt. Bei einer Stabkopierlampe mit einer Länge von 30 cm und einem Außendurchmesser von 8 mm bei einer Rohrwand von 0,6 mm ergab sich eine Schlagweite von 6,5 mm für die dielektrisch behinderten Entladungen. Die dielektrischen Barrieren waren jeweils ca. 170 µm dick und bestanden aus Glaslot, auf dem, wie auf der übrigen Wand, TiO₂ und Leuchtstoff abgeschieden waren. Im Bereich einer Apertur ist das TiO₂ ausgespart. Bei einer Füllung von 160 Torr Xenon ergab sich eine mittlere Lampenleistung von 11 W mit einem erfindungsgemäßen unipolaren elektronischen Vorschaltgerät mit folgenden Bauteilen: Als Speicherkondensator C_{Q} der mit 12 V Gleichspannung versorgten Quelle Q wurden drei keramische Mehrschichtkondensatoren a 10 µF verwendet. Der Schalter T_{Q} war ein Transistor RFP 70 N 80. Der Transformator war ein doppelter EFD 15, N 87 mit einem Vierkammer-Wickelkörper und einem Wicklungsverhältnis von 1:70. In der eben beschriebenen Weise wurde sekundärseitig mit Mittelabgriff gearbeitet, was in Figur 1 der Einfachheit halber nicht dargestellt ist. Es ergab sich ein sehr leichtes und kompaktes elektronisches Vorschaltgerät mit einem Volumen einer Streichholzschachtel, das zudem eine sehr gute elektromagnetische Verträglichkeit zeigte sowohl hinsichtlich der Abstrahlung aus dem Sekundärkreis als auch hinsichtlich der Rückstreuung ins Netz.

Bei der hier betrachteten Kopierlampe besteht der wesentliche Vorteil darin, daß das elektronische Vorschaltgerät mit der Halteeinrichtung für die Kopierlampe selbst im Kopierbetrieb mitfahren kann, also unmittelbar neben der Kopierlampe montiert sein kann. Durch die erheblich reduzierten Zuleitungslängen und durch die dadurch erzielte Unbeweglichkeit der Zuleitungen ergeben sich wesentliche Vorteile im Hinblick auf die Sicherheit, Dauerhaftigkeit und Zuverlässigkeit der Hochspannungsleitungen zwischen dem elektronischen Vorschaltgerät und der Kopierlampe. Auch reduzieren sich dadurch die Zuleitungskapazitäten, weswegen das elektronische Vorschaltgerät in Zusammenhang mit der geringen Kapazität der Kopierlampe selbst eine sehr gute Pulsform erzeugen kann.

Durch den Wegfall der Notwendigkeit der Montage einer bewegten Hochspannungsleitung entfallen auch viele konventionell notwendige Bauteile und reduziert sich damit der Montageaufwand bei der Herstellung eines Kopiergerätes erheblich.

Analoge Vorteile gelten auch für andere Anwendungen solcher Linearstrahler bei der Dokumentenbeleuchtung in Faxgeräten, Scannern usw.

Ein weiteres wesentliches Anwendungsgebiet der Erfindung liegt im Bereich der elektrischen Versorgung von Flachstrahlern für dielektrisch behinderte Entladungen. Hierzu wird verwiesen auf die WO98/43277. Der Offenbarungsgehalt dieser Anmeldung wird hier in Bezug genommen.

## Patentansprüche

1. Betriebsverfahren für eine Entladungslampe (L) mit einer dielektrischen Schicht zwischen zumindest einer Elektrode und einem Entladungsmedium
unter Verwendung eines Vorschaltgeräts mit einem leistungsversorgten Primärkreis (P), einem die Entladungslampe (L) enthaltenden Sekundärkreis (S) sowie einem den Primärkreis (P) mit dem Sekundärkreis (S) verbindenden Transformator (T),
bei welchem Verfahren dem Sekundärkreis (S) aus dem Primärkreis (P) über den Transformator (T) ein Spannungspuls eingeprägt wird, der zu einer eine Zündung bewirkenden äußeren Spannung (U_{L}) an der Entladungslampe (L) und zu einer inneren Gegenpolarisation in der Entladungslampe (L) führt,
**dadurch gekennzeichnet, daß** der Sekundärkreis (S) nach dem Einprägen des Spannungspulses eine Schwingung ausführt, durch die die Ladung von der Entladungslampe (L) wieder abgezogen wird, bis die Gegenpolarisation zu der Rückzündung führt,
und der Spannungspuls nach dem Flußwandlerprinzip aus dem Primärkreis (P) in den Sekundärkreis (S) eingeprägt wird.

2. Betriebsverfahren nach Anspruch 1, bei dem durch die Rückzündung der Transformator (T) des elektronischen Vorschaltgeräts entmagnetisiert wird.

3. Betriebsverfahren nach Anspruch 1 oder 2, bei dem der Sekundärkreis (S) nach der Zündung durch die äußere Spannung (U_{L}) als Schwingkreis isoliert ist.

4. Betriebsverfahren nach einem der vorstehenden Ansprüche, bei dem die Frequenz der Schwingung des Sekundärkreises (S) so groß ist, daß die Zündung durch die äußere Spannung (U_{L}) und die Rückzündung als einheitlicher Wirkleistungspuls eines gepulsten Wirkleistungseinkopplungsverfahrens wirken.

5. Betriebsverfahren nach einem der vorstehenden Ansprüche, bei dem die Frequenz der Schwingung des Sekundärkreises (S) so klein ist, daß die Zeitspanne zwischen der Zündung durch die äußere Spannung (U_{L}) und der Rückzündung als Totzeit eines gepulsten Wirkleistungseinkopplungsverfahrens wirkt.

6. Betriebsverfahren nach einem der vorstehenden Ansprüche, bei dem nach der Zündung durch die äußere Spannung (U_{L}) der primärkreisseitige Stromfluß (I_{W1}) durch den Transformator (T) so früh unterbrochen wird, daß eine Rückspeisung von Energie aus dem Sekundärkreis (S) in den Primärkreis (P) im wesentlichen unterbleibt.

7. Betriebsverfahren nach einem der vorstehenden Ansprüche, bei dem der Primärkreis (P) aus einer Quelle (Q) mit einem keramischen Mehrschichtkondensator (C_{Q}) als Speicherkondensator leistungsversorgt wird.

8. Betriebsverfahren nach einem der vorstehenden Ansprüche, bei dem das elektronische Vorschaltgerät durch einen Schalter (T_{Q}) in dem Primärkreis (P) getaktet wird.

9. Betriebsverfahren nach einem der vorstehenden Ansprüche, bei dem in dem Sekundärkreis (S) ein Mittenabgriff des Transformators (T) als Bezugspotential verwendet wird.

10. Betriebsverfahren nach einem der vorstehenden Ansprüche. bei dem das Vorschaltgerät dazu ausgelegt ist, an die Entladungslampe (L) äußere Spannungen (U_{L}) mit von Spannungspuls zu Spannungspuls alternierendem Vorzeichen anzulegen.

11. Betriebsverfahren nach Anspruch 10, bei dem die Richtung des primärkreisseitigen Stromes (I_{W1}) in dem Transformator (T) von Spannungspuls zu Spannungspuls alterniert.

12. Betriebsverfahren nach Anspruch 11, bei dem der Transformator zwei primärkreisseitige Wicklungen (W1) aufweist, die jeweils einer der beiden Stromrichtungen zugeordnet sind.

13. Betriebsverfahren nach Anspruch 8 und 11, bei dem der Primärkreis zwei Schalter (T_{Q}) aufweist, die jeweils den Strom durch eine der beiden Wicklungen (W1) takten.

14. Betriebsverfahren nach einem der Ansprüche 11 bis 13, bei dem der Primärkreis aus einer Wechselstromquelle versorgt wird, die zwei Speicherkondensatoren halbperiodenweise alternierend lädt, wobei jeder Speicherkondensator jeweils einer der beiden Stromrichtungen zugeordnet ist.

15. Vorschaltgerät für eine Entladungslampe (L) mit einer dielektrischen Schicht zwischen zumindest einer Elektrode und einem Entladungsmedium,
mit einem leistungsversorgten Primärkreis (P), einem Sekundärkreis (S) für die Entladungslampe (L) sowie einem den Primärkreis (P) mit dem Sekundärkreis (S) verbindenden Transformator (T),
wobei das Vorschaltgerät ein Flußwandler ist zum Einprägen eines Spannungspulses aus dem Primärkreis (P) über den Transformator (T) in den Sekundärkreis (S), um an der Entladungslampe (L) eine eine Zündung bewirkende äußere Spannung (U_{L}) und eine innere Gegenpolarisation zu erzeugen,
**dadurch gekennzeichnet, daß** das Vorschaltgerät in dem Primärkreis (P) eine Schalteinrichtung (T_{Q}, SE) aufweist, die ausgelegt ist zum nach der Zündung Unterbrechen des primärseitigen Stromflusses (I_{W1}) durch den Transformator (T) zum Isolieren des Sekundärkreises (S), um eine Schwingung des Sekundärkreises (S) zu erlauben, um die die äußere Spannung (U_{L}) an der Entladungslampe (L) bewirkende Ladung abzuziehen und durch die innere Gegenpolarisation in der Entladungslampe (L) zu einer Rückzündung zu führen.

16. Vorschaltgerät nach Anspruch 15, bei dem der Primärkreis (P) aus einer Quelle (Q) mit einem keramischen Mehrschichtkondensator (C_{Q}) als Speicherkondensator leistungsversorgt wird.

17. Vorschaltgerät nach Anspruch 15 oder 16, bei dem der Transformator (T) sekundärkreisseitig einen Mittenabgriff aufweist.

18. Vorschaltgerät nach einem der Ansprüche 15 bis 17, ausgelegt für ein Verfahren nach einem der Ansprüche 1-14.

19. Beleuchtungssystem mit einer Entladungslampe (L) mit einer dielektrischen Schicht zwischen zumindest einer Elektrode und einem Entladungsmedium und
einem Vorschaltgerät nach einem der Ansprüche 15 - 18.

20. Beleuchtungssystem nach Anspruch 19, dazu ausgelegt, daß durch die Rückzündung der Transformator (T) des Vorschaltgeräts entmagnetisiert wird.

21. Beleuchtungssystem nach Anspruch 19 oder20, bei dem die Eigenfrequenz des Sekundärkreises (S) mindestens 100 kHz beträgt

22. Beleuchtungssystem nach Anspruch 19 oder 20, bei dem die Eigenfrequenz des Sekundärkreises (S) höchstens 33 kHz beträgt.

## Claims

1. Operating method for a discharge lamp (L) having a dielectric layer between at least one electrode and a discharge medium
using a ballast having a power-supplied primary circuit (P), a secondary circuit (S) containing the discharge lamp (L), and also a transformer (T) which connects the primary circuit (P) to the secondary circuit (S),
in which method a voltage pulse is impressed on the secondary circuit (S) from the primary circuit (P) via the transformer (T), which voltage pulse leads to an external voltage (U_{L}) effecting an ignition across the discharge lamp (L) and to an internal counterpolarization in the discharge lamp (L),
**characterized in that**, after the voltage pulse has been impressed, the secondary circuit (S) performs an oscillation through which the charge is withdrawn again from the discharge lamp (L), until the counterpolarization leads to the back ignition, and the voltage pulse is impressed from the primary circuit (P) into the secondary circuit (S) according to the forward converter principle.

2. Operating method according to Claim 1, in which the transformer (T) of the electronic ballast is demagnetized by the back ignition.

3. Operating method according to Claim 1 or 2, in which the secondary circuit (S) is isolated as a resonant circuit after the ignition by the external voltage (U_{L}).

4. Operating method according to one of the preceding claims, in which the frequency of the oscillation of the secondary circuit (S) is so high that the ignition by the external voltage (U_{L}) and the back ignition act as a uniform active power pulse of a pulsed active power coupling-in method.

5. Operating method according to one of the preceding claims, in which the frequency of the oscillation of the secondary circuit (S) is so low that the period of time between the ignition by the external voltage (U_{L}) and the back ignition acts as the dead time of a pulsed active power coupling-in method.

6. Operating method according to one of the preceding claims, in which, after the ignition by the external voltage (U_{L}), the primary-circuit-side current flow (I_{W1}) through the transformer (T) is interrupted so early that a feeding-back of energy from the secondary circuit (S) into the primary circuit (P) essentially does not happen.

7. Operating method according to one of the preceding claims, in which the primary circuit (P) is supplied with power from a source (Q) with a ceramic multilayer capacitor (C_{Q}) as storage capacitor.

8. Operating method according to one of the preceding claims, in which the electronic ballast is clocked by a switch (T_{Q}) in the primary circuit (P).

9. Operating method according to one of the preceding claims, in which, in the secondary circuit (S), a centre tap of the transformer (T) is used as reference-earth potential.

10. Operating method according to one of the preceding claims, in which the ballast is designed to apply to the discharge lamp (L) external voltages (U_{L}) having a sign which alternates from voltage pulse to voltage pulse.

11. Operating method according to Claim 10, in which the direction of the primary-circuit-side current (I_{W1}) in the transformer (T) alternates from voltage pulse to voltage pulse.

12. Operating method according to Claim 11, in which the transformer has two primary-circuit-side windings (W1), which are respectively assigned to one of the two current directions.

13. Operating method according to Claim 8 and 11, in which the primary circuit has two switches (T_{Q}), which respectively clock the current through one of the two windings (W1).

14. Operating method according to one of Claims 11 to 13, in which the primary circuit is supplied from an alternating-current source which alternately charges two storage capacitors in a half-cycle by half-cycle manner, each storage capacitor respectively being assigned to one of the two current directions.

15. Ballast for a discharge lamp (L) having a dielectric layer between at least one electrode and a discharge medium,
having a power-supplied primary circuit (P), a secondary circuit (S) for the discharge lamp (L) and also a transformer (T) which connects the primary circuit (P) to the secondary circuit (S),
the ballast being a forward converter for impressing a voltage pulse from the primary circuit (P) via the transformer (T) to the secondary circuit (S) in order to produce at the discharge lamp (L) an external voltage (U_{L}) effecting an ignition and an internal counterpolarization,
**characterized in that** the ballast has, in the primary circuit (P), a switching device (T_{Q}, SE) which is designed for interrupting, after the ignition, the primary-side current flow (I_{W1}) through the transformer (T) for the purpose of isolating the secondary circuit (S), in order to allow an oscillation of the secondary circuit (S), in order to withdraw the charge effecting the external voltage (U_{L}) across the discharge lamp (L) and to lead to a back ignition by virtue of the internal counterpolarization in the discharge lamp (L).

16. Ballast according to Claim 15, in which the primary circuit (P) is supplied with power from a source (Q) with a ceramic multilayer capacitor (C_{Q}) as storage capacitor.

17. Ballast according to Claim 15 or 16, in which the transformer (T) has a centre tap in the secondary circuit side.

18. Ballast according to one of Claims 15 to 17, designed for a method according to one of Claims 1-14.

19. Illumination system having a discharge lamp (L) having a dielectric layer between at least one electrode and a discharge medium and
a ballast according to one of Claims 15 to 18.

20. Illumination system according to Claim 19, designed to the effect that the transformer (T) of the ballast is demagnetized by the back ignition.

21. Illumination system according to Claim 19 or 20, in which the natural frequency of the secondary circuit (S) is at least 100 kHz.

22. Illumination system according to Claim 19 or 20, in which the natural frequency of the secondary circuit (S) is at most 33 kHz.

## Revendications

1. Procédé d'alimentation d'une lampe (L) à décharge ayant une couche diélectrique entre au moins une électrode et un fluide de décharge,
en utilisant un ballast ayant un circuit (P) primaire alimenté en puissance, un circuit (S) secondaire comprenant la lampe (L) de décharge, ainsi qu'un transformateur (T) reliant le circuit (P) primaire au circuit (S) secondaire,
procédé dans lequel il est appliqué au circuit (S) secondaire, à partir du circuit (P) primaire et par l'intermédiaire du transformateur (T), une impulsion de tension qui donne sur la lampe (L) de décharge une tension (U_{L}) extérieure provoquant un amorçage et dans la lampe (L) de décharge une contre-polarisation intérieure,
**caractérisé en ce que** le circuit (S) secondaire effectue, après l'application de l'impulsion de tension, une oscillation par laquelle la charge est retirée à nouveau de la lampe (L) de décharge jusqu'à ce que la contre-polarisation provoque l'amorçage en retour,
et l'impulsion de tension est appliquée du circuit (P) primaire au circuit (S) secondaire suivant le principe du convertisseur de flux.

2. Procédé d'alimentation suivant la revendication 1, dans lequel le transformateur (T) du ballast électronique est démagnétisé par l'amorçage en retour.

3. Procédé suivant la revendication 1 ou 2, dans lequel le circuit (S) secondaire est isolé en tant que circuit oscillant après l'amorçage par la tension (U_{L}) extérieure.

4. Procédé suivant l'une des revendications précédentes, dans lequel la fréquence de l'oscillation du circuit (S) secondaire est si grande que l'amorçage par la tension (U_{L}) extérieure et l'amorçage en retour agissent en tant qu'impulsion de puissance active unitaire d'un procédé d'injection pulsée de puissance active.

5. Procédé suivant l'une des revendications précédentes, dans lequel la fréquence de l'oscillation du circuit (S) secondaire est si petite que le laps de temps entre l'amorçage par la tension (U_{L}) extérieure et l'amorçage en retour sert de temps mort d'un procédé d'injection pulsée de puissance active.

6. Procédé suivant l'une des revendications précédentes, dans lequel, après l'amorçage par la tension (U_{L}) extérieure, le flux (I_{w1}) de courant du côté du circuit primaire est interrompu par le transformateur (T) si tôt que toute alimentation en retour d'énergie du circuit (S) secondaire au circuit (P) primaire est sensiblement supprimée.

7. Procédé suivant l'une des revendications précédentes, dans lequel le circuit (P) primaire est alimenté en puissance par une source (Q) ayant un condensateur (C_{Q}) à couches multiples en céramique servant de condensateur d'emmagasinage.

8. Procédé suivant l'une des revendications précédentes, dans lequel le ballast électronique est synchronisé par un commutateur (T_{Q}) du circuit (P) primaire.

9. Procédé suivant l'une des revendications précédentes, dans lequel, dans le circuit (S) secondaire, une prise médiane du transformateur (T) est utilisée comme potentiel de référence.

10. Procédé suivant l'une des revendications précédentes, dans lequel le ballast est conçu de manière à appliquer à la lampe (L) de décharge des tensions (U_{L}) extérieures ayant un signe qui alterne d'une impulsion de tension à l'autre.

11. Procédé suivant la revendication 10, dans lequel la direction du courant (I_{w1}) du côté primaire dans le transformateur (T) alterne d'une impulsion de tension à l'autre.

12. Procédé suivant la revendication 11, dans lequel le transformateur comporte deux enroulements (W1) du côté du circuit primaire qui sont associés respectivement à l'un des deux sens du courant.

13. Procédé suivant la revendication 8 et 11, dans lequel le circuit primaire comporte deux commutateurs (T_{Q}) qui synchronisent respectivement le courant passant dans l'un des deux enroulements (W1).

14. Procédé suivant l'une des revendications 11 à 13, dans lequel le circuit primaire est alimenté à partir d'une source de courant alternatif qui charge en alternance, demi-période par demi-période, les deux condensateurs d'emmagasinage, l'un des deux sens du courant étant associé à chacun des condensateurs d'emmagasinage.

15. Ballast pour une lampe (L) à décharge ayant une couche de diélectrique entre au moins une électrode et un fluide de décharge,
comprenant un circuit (P) primaire alimenté en puissance, un circuit (S) secondaire pour la lampe (L) de décharge, ainsi qu'un transformateur (T) reliant le circuit (P) primaire au circuit (S) secondaire,
le ballast étant un convertisseur de flux destiné à appliquer une impulsion de tension du circuit (P) primaire au circuit (S) secondaire par l'intermédiaire du transformateur (T), pour produire sur la lampe (L) de décharge une tension (U_{L}) extérieure provoquant un amorçage et une contre-polarisation intérieure,
**caractérisé en ce que** le ballast a, dans le circuit (P) primaire, un dispositif (T_{Q} SE) de commutation, conçu pour, après l'amorçage, interrompre le flux (I_{w1}) de courant du côté primaire par le transformateur (T) pour isoler le circuit (S) secondaire afin d'autoriser une oscillation du circuit (S) secondaire pour retirer la charge provoquant la tension (U_{L}) extérieure sur la lampe (L) de décharge et pour envoyer la contre-polarisation intérieure dans la lampe (L) de décharge à un amorçage en retour.

16. Ballast suivant la revendication 15, dans lequel le circuit (P) primaire est alimenté en puissance par une source (Q) ayant un condensateur (C_{Q}) à couches multiples en céramique servant de condensateur d'emmagasinage.

17. Ballast suivant la revendication 15 ou 16, dans lequel le transformateur (T) comporte une prise médiane du côté du circuit secondaire.

18. Ballast suivant l'une des revendications 15 à 17, conçu pour un procédé selon l'une des revendications 1 à 14.

19. Système d'éclairage comprenant une lampe (L) à décharge ayant une couche diélectrique entre au moins une électrode et un fluide de décharge, et
un ballast suivant l'une des revendications 15 à 18.

20. Système d'éclairage suivant la revendication 19, conçu pour que le transformateur (T) du ballast soit démagnétisé par l'amorçage en retour.

21. Système d'éclairage suivant la revendication 19 ou 20, dans lequel la fréquence propre du circuit (S) secondaire est d'au moins 100 kHz.

22. Système d'éclairage suivant la revendication 19 ou 20, dans lequel la fréquence propre du circuit (S) secondaire est d'au plus 33 kHz.
